# EUROPÄISCHE PATENTSCHRIFT

(11) **EP 1 445 221 B1**
(45) Veröffentlichungstag und Bekanntmachung des Hinweises auf die Patenterteilung: **14.09.2005**
(21) Anmeldenummer: 04002815.1
(22) Anmeldetag: 09.02.2004
(51) Int. Cl.: B65G 61/00

(54) **Vorrichtung und Verfahren zum Wechseln von Paletten**
A device and a method for switching pallets
Dispositif et procédé pour changer des palettes

(30) Priorität: 07.02.2003 DE 10305095
(43) Veröffentlichungstag der Anmeldung: 11.08.2004
(73) Patentinhaber: Winkler + Dünnebier Aktiengesellschaft, 56564 Neuwied (DE)
(72) Erfinder: Salm, Thomas, Dr., 52074 Aachen (DE); Kutsch, Bernfried, 52224 Stolberg (DE)

(56) Entgegenhaltungen:
- DE-A- 3 417 736
- FR-A- 2 207 076
- US-A- 3 645 409
- US-A- 3 836 018
- US-A- 4 850 783
- US-B1- 6 340 282

## Beschreibung

### I. Anwendungsgebiet

Die vorliegende Erfindung betrifft eine Vorrichtung zum Wechseln von Paletten in einem Palettierautomaten zum Anordnen von Gegenständen auf den Paletten Siehe z.B. das Dokument DE-A-3417736, einen Palettierautomaten mit einer derartigen Vorrichtung sowie ein Verfahren zum Wechseln der Paletten in dem Palettierautomaten. Bei den auf den Paletten anzuordnenden Gegenständen kann es sich im Sinne der Erfindung insbesondere um in Schachteln oder sonstige Behältnisse verpackte Briefhüllen, Hygieneprodukte, wie etwa Windeln, Damenbinden, Papiertaschentücher und Ähnliches, sowie Etiketten für Flaschen handeln.

### II. Technischer Hintergrund

Es ist bekannt, automatische Palettiervorrichtungen, so genannte Palettierautomaten, in Zusammenhang mit Briefhüllenherstellungsmaschinen einzusetzen. Dabei werden die am Ende der Briefhüllenherstellungsmaschine ausgeworfenen, fertigen Briefhüllen zunächst einer automatischen Verpackungsvorrichtung, einem Verpackungsautomaten, zugeführt, der eine bestimmte Menge Briefhüllen in einer Verpackungsschachtel ablegt und in diesem transportsicher verpackt. Dem Verpackungsautomaten ist ein Palettierautomat nachgeschaltet, der einen Palettierroboter und eine Vorrichtung zum Wechseln der Paletten umfasst. Der Palettierroboter übernimmt die von dem Verpackungsautomaten kommenden Verpackungsschachteln und ordnet sie in einer Platz sparenden und für den Transport stabilen Art und Weise auf einer Palette an, die zu diesem Zweck an einem dafür vorgesehenen Beladeplatz bereitgehalten wird.

Sobald eine Palette vollständig mit Verpackungsschachteln beladen ist, muss sie zur Fortsetzung des Palettiervorgangs durch eine leere Palette ersetzt werden. Hierzu sind Vorrichtungen zum Wechseln der Paletten bekannt, die die beladene Palette mittels fest installierter, herkömmlicher Rollen- und/oder Kettenfördermitteln von dem Beladeplatz zu einem Abholplatz transportiert, von welchem sie beispielsweise mit Hilfe eines Gabelstaplers abgeholt werden kann. Des Weiteren ist bei den bekannten Vorrichtungen ein Zuführplatz vorgesehen, von dem aus ebenso mittels fest installierter, herkömmlicher Rollen- und/oder Kettenfördermitteln eine leere Palette zu dem Beladeplatz befördert werden kann.

Die bekannten Vorrichtungen mit den Rollen- und/oder Kettenfördermitteln zum Wechseln der Paletten weisen zwei wesentliche Nachteile auf. Einerseits beanspruchen sie relativ viel Raum, da die Rollen- und/oder Kettenfördermittel sowohl an dem Zuführplatz als auch an dem Beladeplatz als auch an dem Abholplatz fest installiert vorgesehen werden müssen. Dies führt insbesondere dann zu Platzproblemen, wenn der Raum hinter der Briefhüllenherstellungsmaschine begrenzt ist und/oder mehrere Briefhüllenherstellungsmaschinen nebeneinander aufgestellt werden und der Durchgang zwischen den Maschinen lediglich so breit gewählt werden soll, dass Bedien- und Wartungsarbeiten in angemessener Weise an der Maschine vorgenommen werden können. Die hierfür erforderliche Breite des Durchgangs ist üblicherweise kleiner als diejenige Breite, die vorzusehen ist, wenn zwischen zwei benachbarten Maschinen ein Abholplatz oder ein Zuführplatz mit herkömmlicher Rollen- und/oder Kettenfördertechnik angeordnet wird. Andererseits muss bei den bekannten Vorrichtungen zum Wechseln der Paletten der Palettierprozess in unerwünschter Weise relativ lange unterbrochen werden, nämlich zum Einen für das Befördern der vollen Palette von dem Beladeplatz zu dem Abholplatz und zum Anderen für das erst anschließend erfolgende Befördern der leeren Palette von dem Zuführplatz zu dem Beladeplatz.

### III. Darstellung der Erfindung

### a) Technische Aufgabe

Es ist daher die Aufgabe der vorliegenden Erfindung, eine Vorrichtung zum Wechseln von Paletten in einem Palettierautomaten zum Anordnen von Gegenständen auf den Paletten, einen Palettierautomaten mit einer derartigen Vorrichtung sowie ein Verfahren zum Wechseln der Paletten in dem Palettierautomaten zu schaffen, die, der bzw. das einerseits den Platzbedarf des Palettierautomaten minimiert und andererseits möglichst geringe Unterbrechungsdauern des Palettierprozesses ermöglicht.

### b) Lösung der Aufgabe

Diese Aufgabe wird mit einer Vorrichtung, einem Palettierautomaten bzw. einem Verfahren mit den Merkmalen des Anspruchs 1, 12 bzw. 13 gelöst. Weitere Ausgestaltungen der Erfindung ergeben sich aus den Unteransprüchen.

Erfindungsgemäß wird eine Vorrichtung zum Wechseln von Paletten mit einem verfahrbaren Transferwagen vorgeschlagen, der in einem ersten Palettenbereich eine erste Palette und in einem zweiten Palettenbereich eine zweite Palette aufnehmen kann. An dem Transferwagen und/oder an einer ortsfesten, nicht mit dem Transferwagen mitbewegten Stelle der Vorrichtung ist eine Antriebseinrichtung vorgesehen, mittels welcher der Transferwagen zwischen wenigstens einer ersten Stellung und einer zweiten Stellung verfahrbar ist. Dabei befindet sich der erste Palettenbereich in der ersten Stellung des Transferwagens an einem Zuführplatz des Palettierautomaten, an welchem eine leere Palette auf den ersten Palettenbereich aufgelegt werden kann. Gleichzeitig befindet sich der zweite Palettenbereich des Transferwagens in dessen erster Stellung an einem Beladeplatz des Palettierautomaten. Auf einer in dem zweiten Palettenbereich befindlichen Palette können daher die zu palettierenden Gegenstände vorzugsweise mit Hilfe eines Palettierroboters angeordnet bzw. gestapelt werden. Nach dem Verfahren des Transferwagens in seine zweite Stellung befindet sich der erste Palettenbereich mit der leeren Palette an dem Beladeplatz, während sich die in dem zweiten Palettenbereich befindliche, volle Palette zu einem Abholplatz bewegt hat, von dem sie beispielsweise mit Hilfe eines Gabelstaplers zur weiteren Verladung abgeholt werden kann.

Durch das Verfahren des Transferwagens von der ersten Stellung in die zweite Stellung wird in vorteilhafter Weise bewirkt, dass gleichzeitig die volle Palette von dem Beladeplatz zu dem Abholplatz befördert wird und die leere Palette von dem Zuführplatz zu dem Beladeplatz gelangt. Dadurch wird der Zeitraum, in welchem der Palettierprozess unterbrochen werden muss, gegenüber einem zeitlich hintereinander erfolgenden Befördern der vollen Palette zu dem Abholplatz und der leeren Palette zu dem Beladeplatz erfindungsgemäß minimiert.

Vorzugsweise weist der Transferwagen ein antriebsloses Palettenrelativbewegungsmittel auf, das es ermöglicht, den Transferwagen unter einer zur Umgebung ortsfest bleibenden Palette vorzugsweise ohne wesentliche Reibung hindurch zu bewegen, obwohl die Palette nach wie vor auf dem Transferwagen aufliegt bzw. von diesem getragen wird, d.h. in Kontakt mit dem Transferwagen steht. Das Palettenrelativbewegungsmittel erstreckt sich sowohl über den ersten Palettenbereich als auch über den zweiten Palettenbereich und kann um Umlenkrollen endlos umlaufend an dem Transferwagen gelagert sein. Alternativ besteht die Möglichkeit, das Palettenrelativbewegungsmittel aus einer oder mehreren Gleitleisten zu bilden, die an dem Transferwagen befestigt sind. Derartige Gleitleisten können in Kontakt mit der Unterseite einer Palette problemlos entlang dieser gleiten. Das Palettenrelativbewegungsmittel ermöglicht es insbesondere, den Transferwagen nach dem Abholen der vollen Palette von dem Abholplatz von seiner zweiten Stellung in seine erste Stellung zurück zu bewegen, ohne die an dem Beladeplatz, d.h. in der zweiten Stellung des Transferwagens in dem ersten Palettenbereich, befindliche Palette relativ zu ihrer Umgebung zu bewegen. Dadurch kann die am Beladeplatz befindliche Palette mit den zu palettierenden Gegenständen beladen werden, während der Transferwagen unter ihr hindurch fährt und sie dabei gleichzeitig berührt bzw. trägt und abstützt.

Erfindungsgemäß wird der Vorteil erreicht, dass der Abholplatz zum Abholen der vollen Palette außerhalb eines Gestellrahmens des Palettierautomaten vorgesehen werden kann, und zwar ohne dort permanent vorhandene und somit permanent Raum einnehmende Rollen- und/oder Kettenfördermittel wie im Stand der Technik vorsehen zu müssen. Der die volle Palette tragende, zweite Palettenbereich des Transferwagens fährt einfach in der Art eines freitragenden Auslegerarms aus dem Gestellrahmen des Palettierautomaten heraus an einen hierfür vorgesehenen Platz, der lediglich vorübergehend als Abholplatz fungiert. Nach dem Zurückfahren des Transferwagens in seine erste Stellung ist dieser Abholplatz wieder völlig frei und kann für andere Zwecke genutzt werden, beispielsweise als Durchgang zwischen zwei nebeneinander stehenden Maschinen, d.h. als sonstige Verkehrsfläche, die nicht durch aus dem Boden herausragende Bestandteile der erfindungsgemäßen Vorrichtung in ihren Nutzungsmöglichkeiten eingeschränkt wird.

Bei dem endlos umlaufenden Palettenrelativbewegungsmittel kann es sich vorzugsweise um eine oder mehrere Rollenketten, insbesondere Mehrfachrollenketten, handeln. Bei Ketten dieser Art ist eine Vielzahl von Rollen drehbar zwischen den Gliedern zweier Gliederketten gelagert. Denkbar sind auch andersartige Palettenrelativbewegungsmittel, wie beispielsweise in Form von endlos um Umlenkrollen umlaufende Bänder aus geeignetem Kunststoff und/oder Gummi oder in Form von aus der Oberfläche des Transferwagens ein wenig herausragende Rollen, die drehbar gelagert sind.

Der Transferwagen kann erfindungsgemäß während seiner Verfahrbewegung zwischen der ersten Stellung und der zweiten Stellung von einer Führungseinrichtung geführt werden. Diese weist vorzugsweise wenigstens zwei Führungsschienen auf, in die an dem Transferwagen drehbar gelagerte Führungsrollen eingreifen. Alternativ ist denkbar, die Führungsschienen an dem Transferwagen anzuordnen und die in diese eingreifenden Führungsrollen ortsfest an einem Rahmengestell drehbar zu lagern. Ein oder mehrere Räder sind vorzugsweise im mittleren Bereich des Transferwagens angeordnet und mittels der Antriebseinrichtung motorisch antreibbar. Bei Bedarf kann der vorzugsweise freitragende, zweite Palettenbereich des Transferwagens mit einem oder mehreren Stützrädem abgestützt werden.

Sollen die leeren Paletten dem Zuführplatz nicht einzeln zugeführt werden, so kann erfindungsgemäß ein automatisches Palettenmagazin zur Bevorratung leerer Paletten oberhalb des Zuführplatzes bzw. oberhalb des ersten Palettenbereichs des sich in der ersten Stellung befindlichen Transferwagens vorgesehen werden. Da das Palettenmagazin einen Rahmen aufweist, ist es vorzugsweise mit einem gewissen Mindestabstand zu dem Beladeplatz anzuordnen, um zu gewährleisten, dass der Palettierroboter zum Beladen der jeweiligen Palette genügend Seitenfreiheit um die zu beladende Palette herum hat. Daher ist bei der Ausführungsform mit Palettenmagazin eine dritte Stellung des Transferwagens vorgesehen, in der die zu palettierenden Gegenstände auf einer in dem zweiten Palettenbereich befindlichen Palette angeordnet werden können. In dieser dritten Stellung ist der erste Palettenbereich des Transferwagens nicht mit einer leeren Palette beladbar. Hierzu ist das Anfahren der ersten Stellung des Transferwagens erforderlich.

### c) Ausführungsbeispiele

Nachfolgend werden mehrere Ausführungsformen der vorliegenden Erfindung beispielhaft anhand der Zeichnungen beschrieben. Es zeigen:
- Fig. 1: eine Aufsicht auf zwei Verpackungsautomaten sowie zwei erfindungsgemäße Palettierautomaten zweier nicht gezeigter, nebeneinander stehender Briefhüllenherstellungsmaschinen;
- Fig. 2: eine Seitenansicht einer erfindungsgemäßen Vorrichtung mit in der ersten Stellung befindlichem Transferwagen;
- Fig. 3: eine Aufsicht auf die erfindungsgemäße Vorrichtung gemäß Fig. 2;
- Fig. 4: eine Vorderansicht der erfindungsgemäßen Vorrichtung in der Blickrichtung gemäß Fig. 3 von unten;
- Fig. 5-13: Seitenansichten verschiedener Betriebszustände einer ersten Ausführungsform der erfindungsgemäßen Vorrichtung ohne Palettenmagazin, und zwar

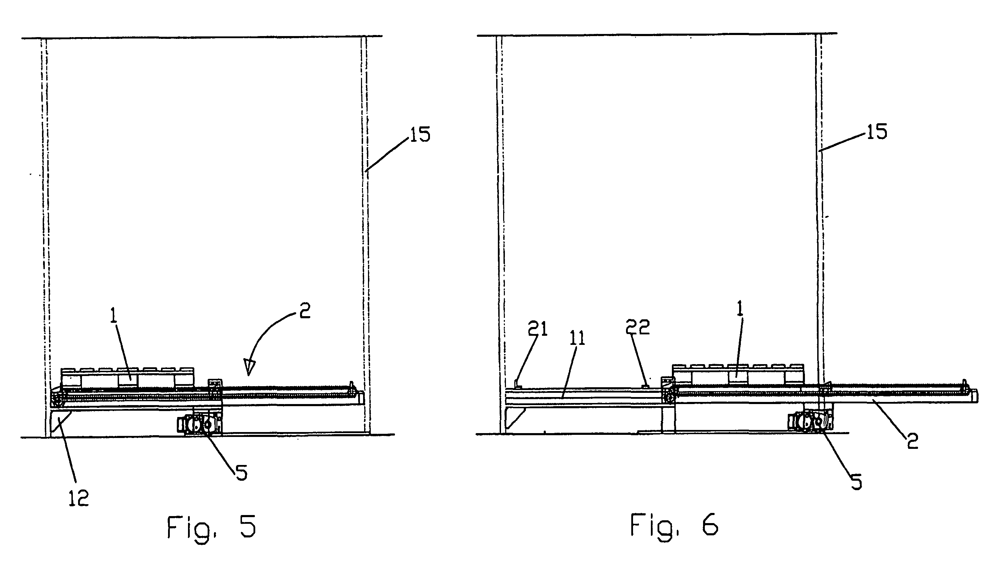

Fig. 5 den Transferwagen in seiner ersten Stellung mit einer leeren Palette in dem ersten Palettenbereich;
Fig. 6 den Transferwagen in seiner zweiten Stellung;

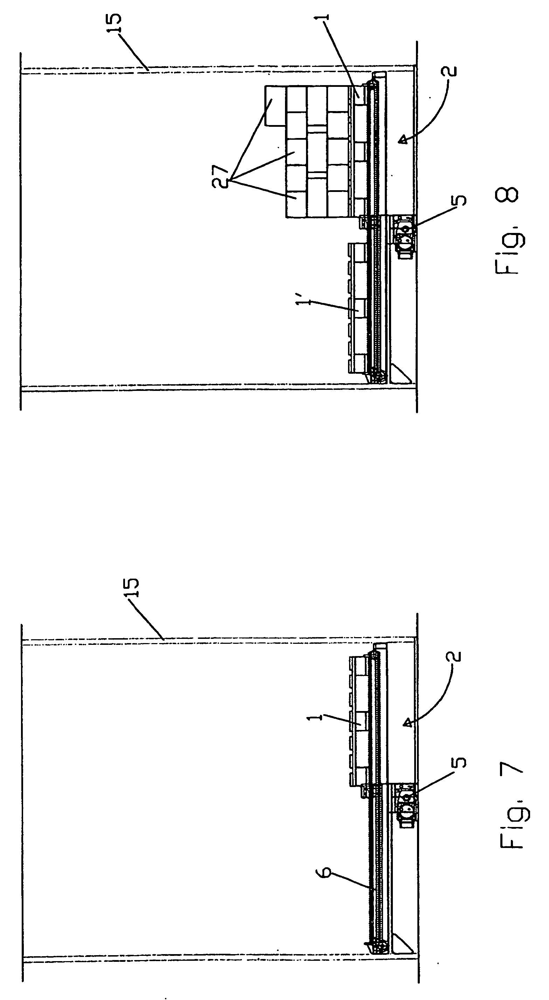

Fig. 7 den Transferwagen, nachdem er in die erste Stellung zurückgefahren wurde;
Fig. 8 den Transferwagen mit leerer Palette in dem ersten Palettenbereich und einer Palette in dem zweiten Palettenbereich, die gerade beladen wird;

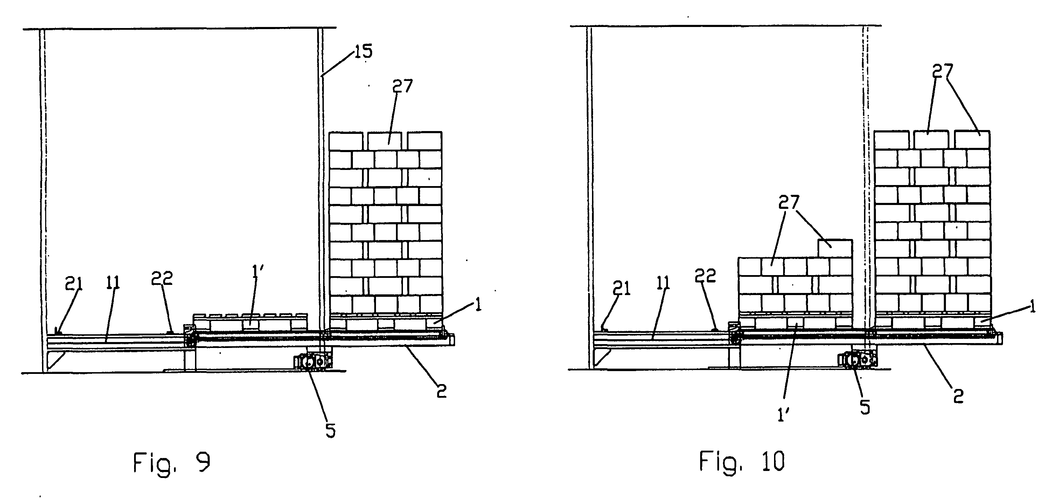

Fig. 9 den Transferwagen in seiner zweiten Stellung mit der in dem zweiten Palettenbereich befindlichen, beladenen Palette;
Fig. 10 den Transferwagen gemäß Fig. 9, wobei begonnen wurde, die in dem ersten Palettenbereich befindliche Palette zu beladen;

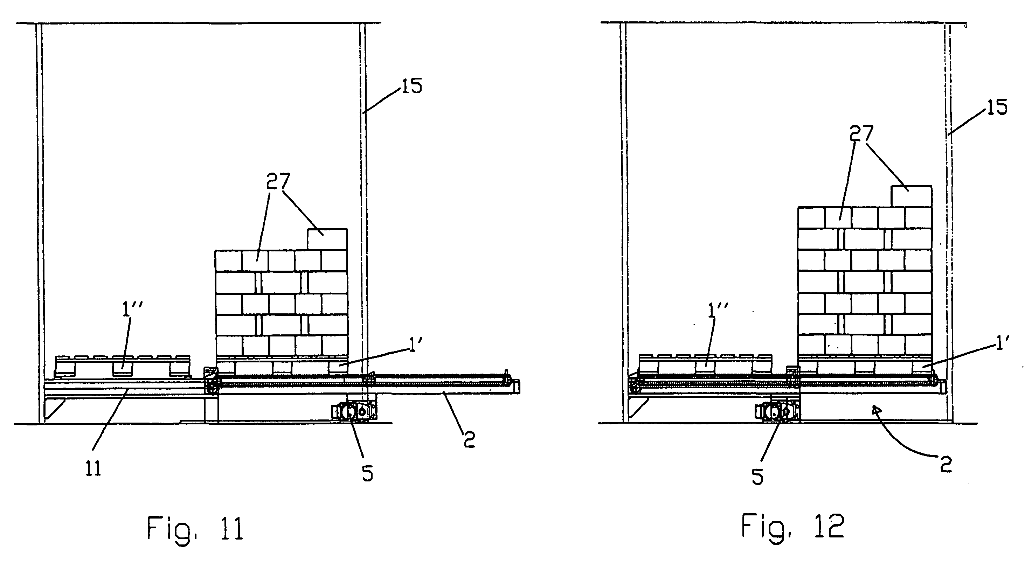

Fig. 11 den Transferwagen gemäß Fig. 10, wobei die beladene Palette bereits abgeholt und eine leere Palette nachgelegt wurde;
Fig. 12 den während des Palettierprozesses in die erste Stellung zurückgefahrenen Transferwagen;

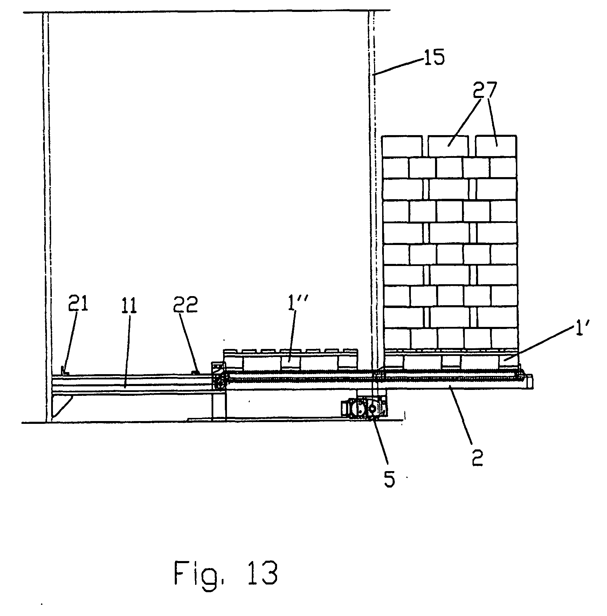

Fig. 13 den nach Beendigung des Palettierprozesses in die zweite Stellung ausgefahrenen Palettierwagen;

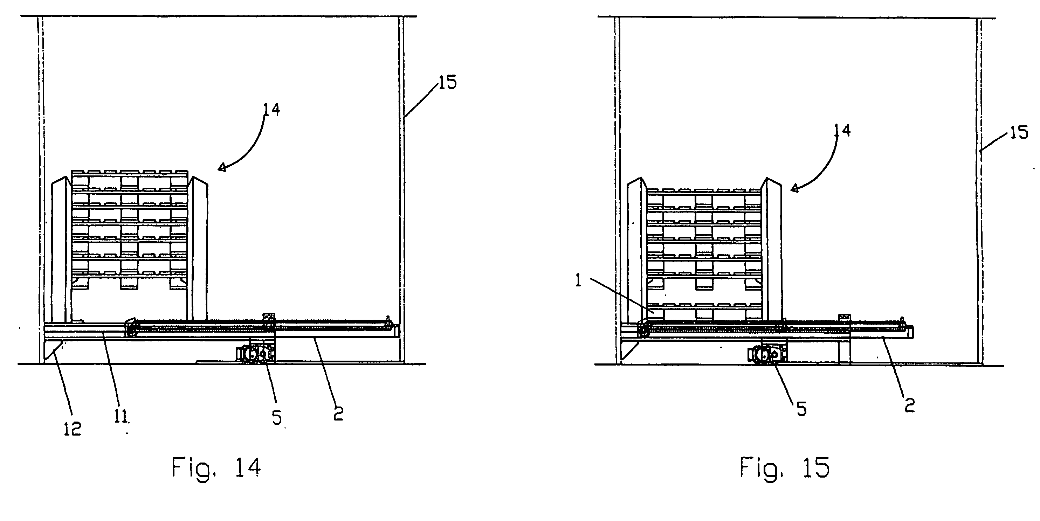

- Fig. 14-23: Seitenansichten verschiedener Betriebszustände einer zweiten erfindungsgemäßen Vorrichtung mit Palettenmagazin, und zwar
Fig. 14 den Transferwagen in seiner dritten Stellung sowie das geladene Palettenmagazin;
Fig. 15 den zum Abholen einer leeren Palette in die erste Stellung verfahrenen Transferwagen;

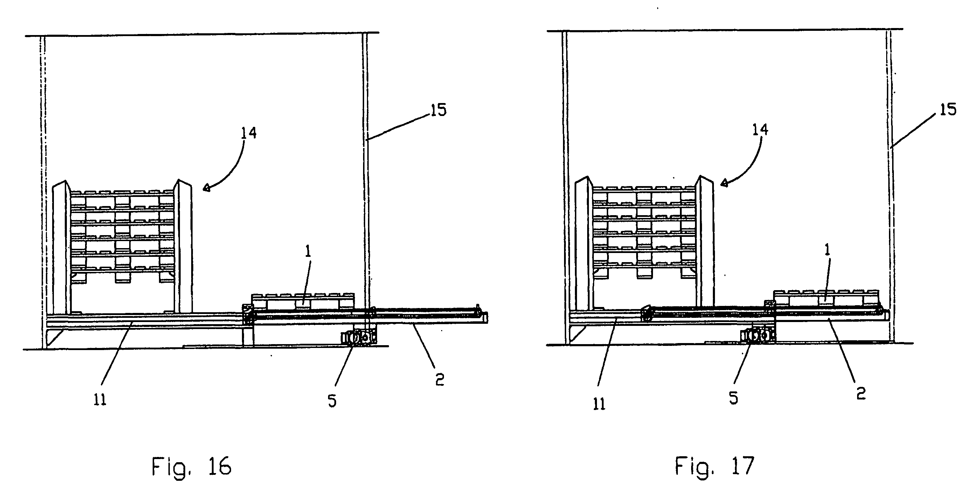

Fig. 16 den in die zweite Stellung gefahrenen Transferwagen mit leerer Palette in dem ersten Palettenbereich;
Fig. 17 den in die dritte Stellung zurückgefahrenen Transferwagen;

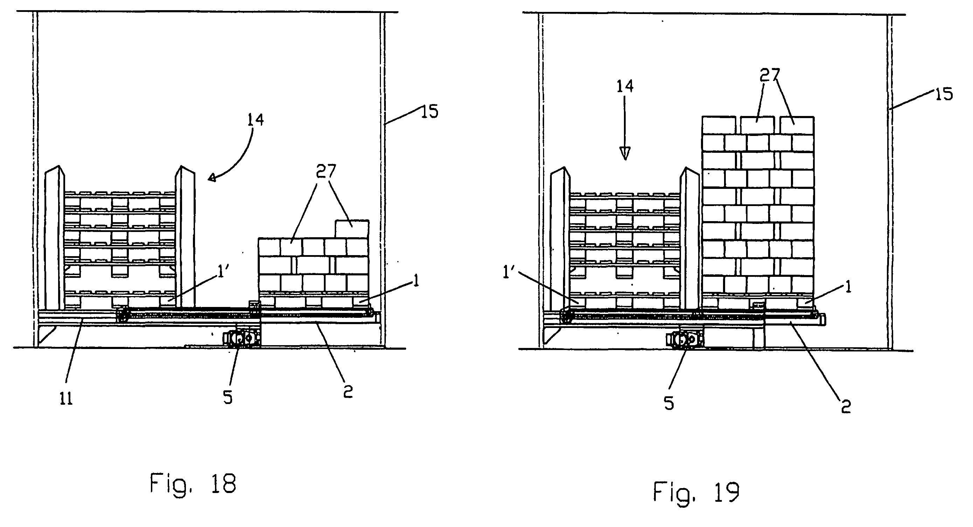

Fig. 18 den Transferwagen gemäß Fig. 17 während des Palettierprozesses, wobei die nächste, leere Palette bereits vereinzelt wurde;
Fig. 19 den mit beladener Palette in die erste Stellung gefahrenen Transferwagen;

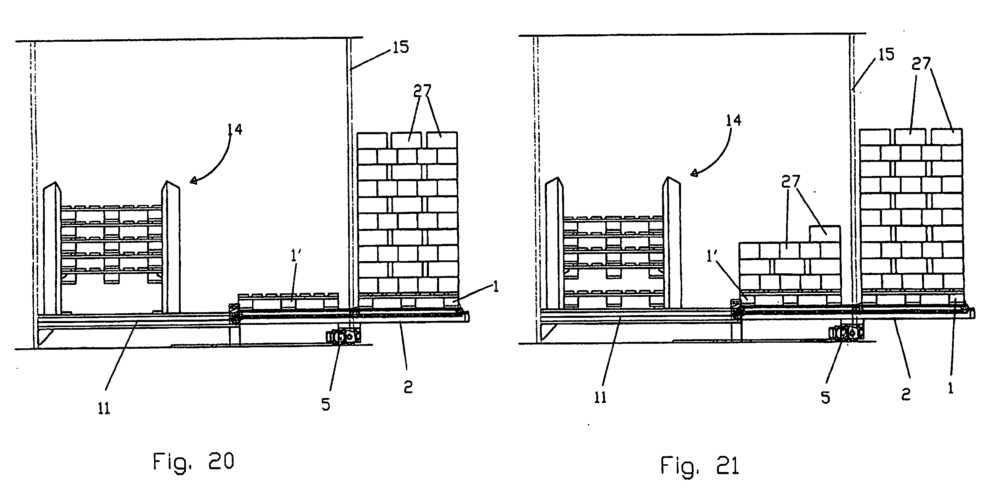

Fig. 20 den mit leerer Palette und beladener Palette in die zweite Stellung gefahrenen Transferwagen;
Fig. 21 den Transferwagen gemäß Fig. 20 während des Palettiervorgangs sowie mit einer weiteren, vereinzelten, leeren Palette;

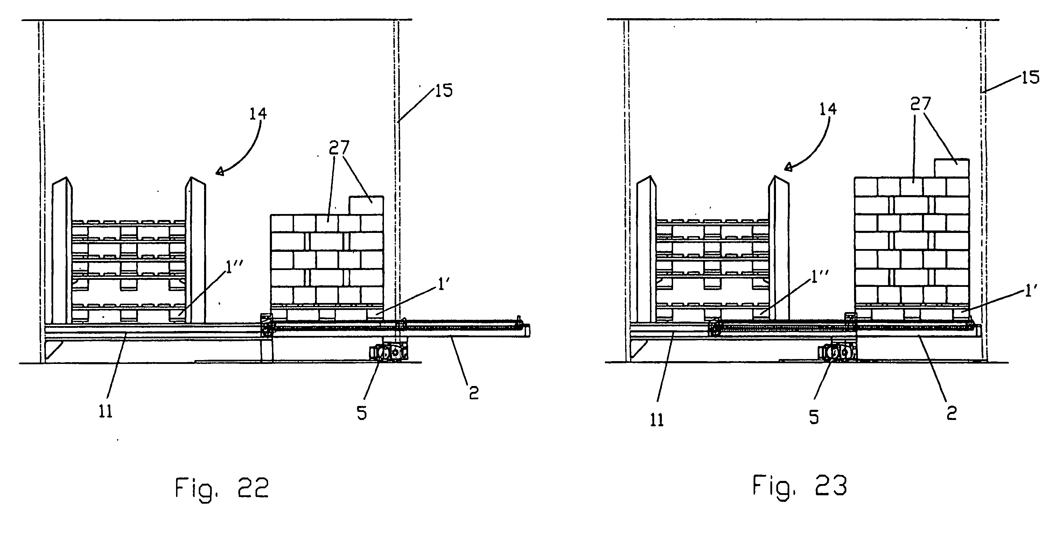

Fig. 22 den Transferwagen gemäß Fig. 21, wobei die beladene Palette während des Palettiervorgangs abgeholt wurde;
Fig. 23 den während des Palettiervorgangs in die dritte Stellung zurückgefahrenen Transferwagen;

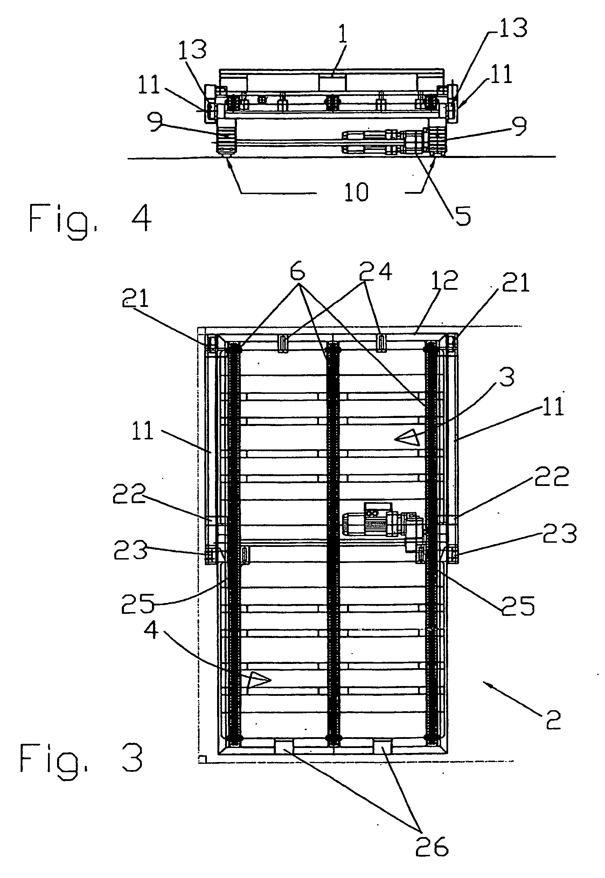

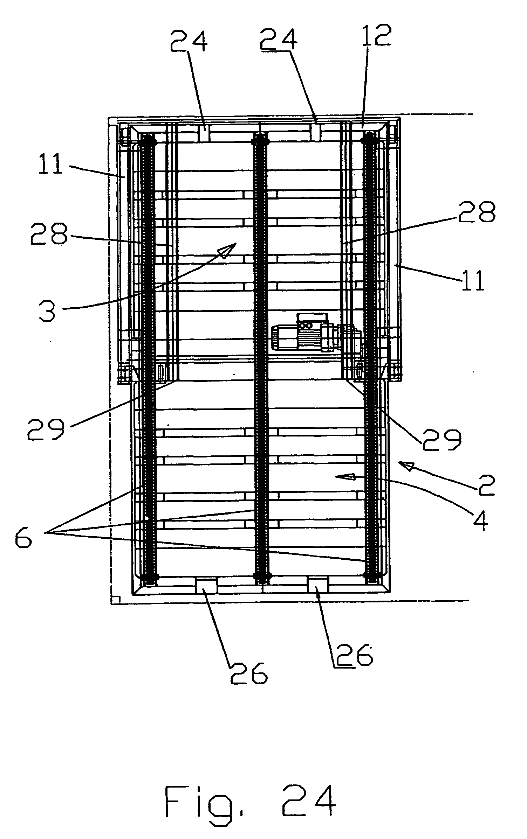

Fig. 24 eine Aufsicht auf eine weitere Ausführungsform der erfindungsgemäßen Vorrichtung ähnlich zu derjenigen gemäß Fig. 3; und

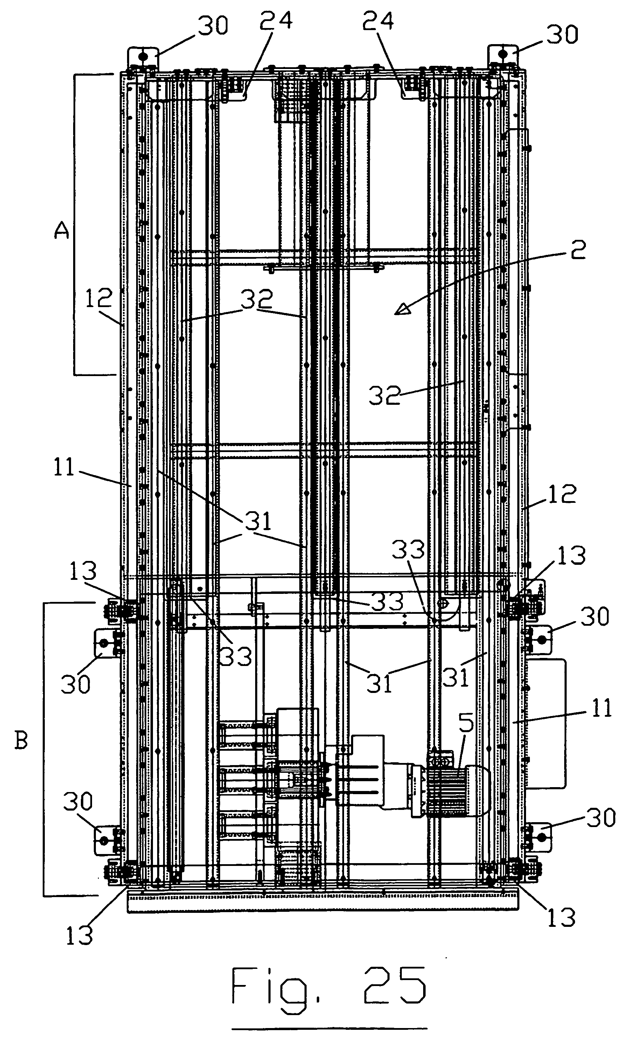

Fig. 25 eine Aufsicht auf eine noch weitere Ausführungsform der erfindungsgemäßen Vorrichtung ähnlich zu denjenigen gemäß der Fig. 3 bzw. 24.

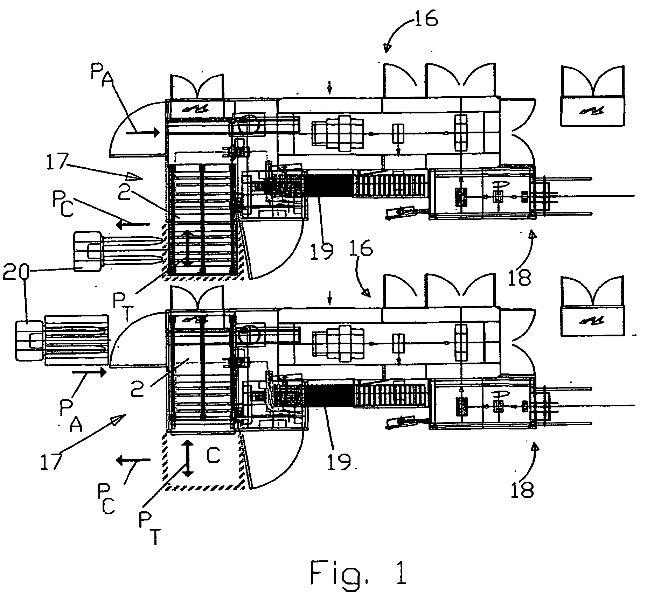

In der Aufsicht gemäß Fig. 1 sind zwei Verpackungsautomaten 16 sowie zwei erfindungsgemäße Palettierautomaten 17 mit erfindungsgemäßen Vorrichtungen zum Wechseln von Paletten zu erkennen. Des Weiteren sind die hinteren Enden 18 zweier nicht gezeigter Briefhüllenherstellungsmaschinen zu erkennen, die sich rechts an die Fig. 1 anschließen. Die von den Briefhüllenherstellungsmaschinen hergestellten Briefhüllen werden an den Maschinenenden Enden 18 stapelweise dem jeweiligen Verpackungsautomat 16 zugeführt, der die Briefhüllenstapel in Verpackungsschachteln verpackt. Die mit fertigen Briefhüllen gefüllten Verpackungsschachteln fungieren in dem gezeigten Ausführungsbeispiel als zu palettierende Gegenstände im Sinne der vorliegenden Erfindung. Sie werden jeweils auf ein Förderband 19 gelegt, das sie dem jeweiligen Palettierautomaten 17 zuführt.

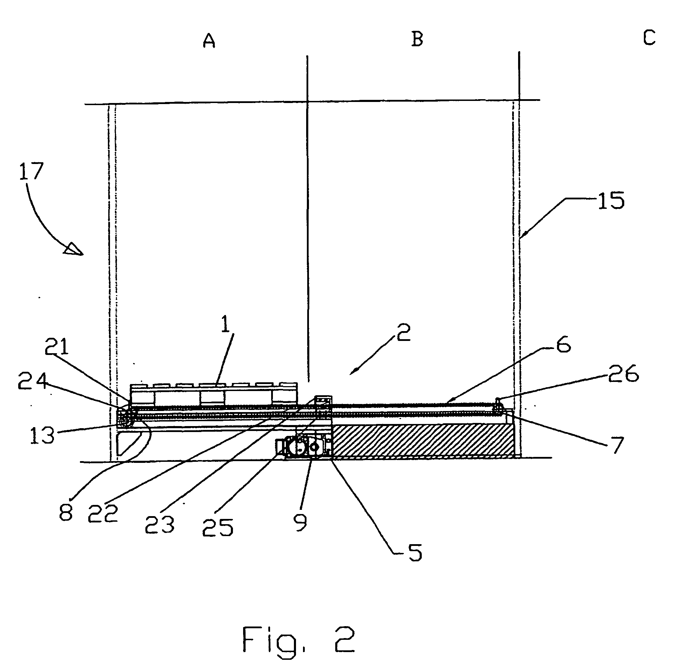

Die Palettierautomaten 17 umfassen jeweils neben einem Palettierroboter, der die Verpackungskartons von dem jeweiligen Förderband 19 aufnimmt und auf einer Palette stapelt, die erfindungsgemäße Vorrichtung zum Wechseln von Paletten gemäß der Figuren 2 bis 4. Fig. 2 zeigt eine Seitenansicht der erfindungsgemäßen Vorrichtung, wie sie sich im Wesentlichen ergibt, wenn man in Fig. 1 von links auf den dort unteren Palettierautomat 17 blickt. Der Palettierautomat 17 weist einen Gestellrahmen 15 auf, innerhalb dessen sich in Fig. 2 der Transferwagen 2 befindet. Wie am Besten in den Figuren 3 und 4 zu erkennen ist, ist der Transferwagen 2 in zwei Führungsschienen 11 eines bei der gezeigten Ausführungsform in Aufsicht im Wesentlichen U-förmigen Rahmengestells 12 linear beweglich gelagert, wobei seitlich an dem Transferwagen 2 drehbar angebrachte Führungsrollen 13 in die im Wesentlichen einen U-Querschnitt aufweisenden Führungsschienen 11 eingreifen.

Ein an der Unterseite des Transferwagens 2 angebrachter Elektromotor 5 dient als Antriebseinrichtung zum Antreiben zweier Räder 9 des Transferwagens 2, die in Schienen 10 geführt und am Besten in den Figuren 2 und 4 zu erkennen sind. Mit Hilfe des Elektromotors 5 kann der Transferwagen 2 aus einer in den Figuren 1 unten, 2 und 3 gezeigten, ersten Stellung in eine zweite Stellung gefahren werden, die in Zusammenhang mit dem in Fig. 1 oberen Palettierautomaten 17 gezeigt ist. Bei dem Verfahren des Transferwagens 2 in die zweite Stellung bewegt er sich in Fig. 2 nach rechts bzw. in Fig. 3 nach unten. Wie in Fig. 3 zu erkennen ist, ist der Transferwagen 2 in der ersten Stellung etwa mit der Hälfte seiner Länge in die Führungsschienen 11 eingefahren. In der zweiten Stellung ist der Transferwagen 2 nahezu vollständig aus den Führungsschienen 11 ausgefahren, wobei er jedoch noch in den in Fig. 2 rechten bzw. in Fig. 3 unteren Enden der Führungsschienen 11 abgestützt wird, um ein Kippen um die Achse der Räder 9 zu verhindern, die entsprechend der Figuren 2 und 3 im Wesentlichen in der Mitte des Transferwagens 2 angeordnet sind.

An dem Transferwagen 2 sind bei der gezeigten Ausführungsform insgesamt drei Mehrfachrollenketten 6 jeweils um zwei Umlenkrollen 7 und 8 endlos umlaufend gelagert, wie in den Figuren 2 und 3 zu sehen ist. Die Mehrfachrollenketten 6 werden nicht aktiv angetrieben, sondern rollen nur über die Umlenkrollen 7 und 8 ab, wenn eine Palette 1 relativ zu dem Gestellrahmen 15 bzw. dem Rahmengestell 12 gehalten wird. In Fig. 3 sind ein erster Palettenbereich 3 und ein zweiter Palettenbereich 4 des Transferwagens 2 zu erkennen. Es handelt sich dabei um hier im Wesentlichen quadratische Flächenbereiche der Oberseite des Transferwagens 2, in welchen Paletten 1 auf dem Transferwagen 2 angeordnet werden können.

In Fig. 2 ist ein Zuführplatz A, ein Beladeplatz B und ein außerhalb des Gestellrahmens 15 liegender Abnahmeplatz C gekennzeichnet. Dem Zuführplatz A kann eine leere Palette 1 gemäß der Pfeile P_{A} in Fig. 1 zugeführt werden, beispielsweise mit Hilfe eines Gabel- oder Deichselstaplers 20. An dem Beladeplatz B kann eine dort befindliche Palette mit Hilfe des Palettierroboters mit den Verpackungskartons beladen werden. Von dem Abnahmeplatz C kann eine vollständig beladene Palette gemäß der Pfeile P_{C} in Fig. 1 zum Zwecke des Weitertransports abgeholt werden, wenn sich der Transferwagen 2 in seiner zweiten Stellung befindet, wie in Fig. 1 oben gezeigt. In Fig. 1 unten befindet sich der Transferwagen 2 in seiner ersten Stellung, in der er vollständig innerhalb des Grundrisses des Gestellrahmens 15 des Palettierautomaten 17 angeordnet ist. Mit gestrichelten Linien ist in Fig. 1 der Abholplatz C gekennzeichnet, der gemäß des Doppelpfeiles P_{T} in Fig. 1 lediglich vorübergehend von dem Transferwagen 2, d.h. von seinem zweiten Palettenbereich 4, angefahren wird. Der Abholplatz C befindet sich somit stets außerhalb des Gestellrahmens 15 des Palettierautomaten 17 und bildet somit auch keinen räumlichen Bestandteil der erfindungsgemäßen Vorrichtung. Er muss lediglich als Raumbereich am Aufstellungsort der Vorrichtung vorhanden sein, um dort vorübergehend im Rahmen des bestimmungsgemäßen Gebrauchs der erfindungsgemäßen Vorrichtung genutzt zu werden.

An Hand der Fig. 1 ist deutlich der besondere Platzspareffekt der vorliegenden Erfindung erkennbar. Die beiden gemäß Fig. 1 nebeneinander stehenden Briefhüllenherstellungsmaschinen mit ihren Verpackungsautomaten 16 sowie Palettierautomaten 17 können näher zusammengerückt werden als im Stand der Technik, da sich an dem Abnahmeplatz C keine permanent vorhandenen Rollen- und/oder Kettenfördermittel befinden. Ein für den bestimmungsgemäßen Betrieb der Briefhüllenherstellungsmaschinen erforderlicher Durchgang zwischen den Maschinen ist ohne Weiteres gewährleistet, wenn der Transferwagen 2 von seiner in Fig. 1 oben gezeigten, zweiten Stellung in seine in Fig. 1 unten gezeigte, erste Stellung gebracht wird.

Zum Positionieren der Paletten an und zum Verfahren der Paletten zwischen dem Zuführplatz A, dem Beladeplatz B und dem Abholplatz C sind erfindungsgemäß verschiedene Anschläge und Auflagen an dem Transferwagen 2 oder an dem ortsfesten, bei der gezeigten Ausführungsform in Aufsicht U-förmigen Rahmengestell 12 angebracht. Zwei vorzugsweise winklige Anschläge 21 sind als Positionierhilfen einer leeren Palette an dem Zuführplatz A an dem Rahmengestell 12 befestigt. Des Weiteren sind zwei Auflagen 22 ebenso als Positionierhilfen einer leeren Palette an dem Zuführplatz A an dem Rahmengestell 12 befestigt. Zwei in Fig. 2 von links nach rechts und in Fig. 3 von oben nach unten einseitig überfahrbare Anschläge 23 sind an dem Rahmengestell 12 zur Positionierung einer Palette auf dem Beladeplatz B angebracht, wobei sie ohne Verwendung eines Palettenmagazins vorzugsweise federbetätigt sind und mit Verwendung eines Palettenmagazins vorzugsweise fremdbetätigt werden. Zwei bei Bewegung des Transferwagens 2 von seiner zweiten Stellung in seine erste Stellung einseitig überfahrbare Anschläge 24 sind zur Mitnahme einer leeren Palette von dem Zuführplatz A zu dem Beladeplatz B an dem Transferwagen 2 befestigt. Des Weiteren sind zwei in Fig. 2 von links nach rechts bzw. in Fig. 3 von oben nach unten einseitig überfahrbare Anschläge 25 zur Festsetzung einer Palette an dem Beladeplatz B und an dem Abholplatz C an dem Transferwagen 2 angebracht. Schließlich sind zwei unbewegliche, starre Anschläge 26 zur Festsetzung einer Palette an dem Beladeplatz B und an dem Abholplatz C an dem Transferwagen 2 befestigt. Bei Bedarf kann auch jeweils nur ein Anschlag bzw. eine Auflage angeordnet werden.

Nachfolgend wird die Ablaufreihenfolge beim Palettenwechsel mit der erfindungsgemäßen Vorrichtung zum Einen in Verbindung mit einer Ausführungsform ohne Palettenmagazin und zum Anderen in Verbindung mit einer Ausführungsform mit Palettenmagazin erläutert.

Die Fig. 5 bis 13 zeigen zeitlich aufeinander folgende Zustände während des Palettenwechsels gemäß der vorliegenden Erfindung, wobei kein Palettenmagazin vorgesehen ist.

Zunächst befindet sich der Transferwagen 2 gemäß Fig. 5 in seiner ersten Stellung, in welcher er vollständig von dem Gestellrahmen 15 des Palettierautomaten 17 umgeben ist. Auf den sich an dem Zuführplatz A befindlichen, ersten Palettenbereich 3 des Transferwagens 2 wird eine leere Palette 1 aufgelegt. Diese wird mit Hilfe des Anschlages 21 und der Auflage 22 positioniert. Anschließend fährt der Transferwagen 2 in die in Fig. 6 gezeigte, zweite Stellung, wobei die leere Palette 1 mit Hilfe des Anschlages 24 an den Beladeplatz B mitgenommen und der Anschlag 23 an dem Rahmengestell 12 überfahren wird. Bereits jetzt in dieser zweiten Stellung des Transferwagens 2 könnte der Palettiervorgang sofort beginnen.

Entsprechend Fig. 7 fährt der Transferwagen 2 dann zurück in seine erste Stellung, wobei der Anschlag 23 die leere Palette 1 ortsfest an dem Beladeplatz B hält und der Anschlag 25 überfahren wird. Dabei wandert die leere oder die bereits dem Palettiervorgang unterzogene Palette 1 von dem ersten Palettenbereich 3 in den zweiten Palettenbereich 4 und die drei Mehrfachrollenketten 6 laufen um ihre jeweiligen Umlenkrollen 7 und 8 um. Falls der Palettiervorgang noch nicht gestartet wurde, kann daraufhin entsprechend Fig. 8 der Palettierroboter mit dem Beladen der an dem Beladeplatz B befindlichen Palette 1 beginnen. Die die Briefhüllen enthaltenden Verpackungsschachteln 27 werden nach einem vorprogrammierten Stapelschema auf der Palette 1 angeordnet. Eine leere Palette 1' kann entweder vor Beginn des Beladens der Palette 1 oder nach einer kurzen Unterbrechung des Palettiervorgangs auf den an dem Zuführplatz A befindlichen, ersten Palettenbereich 3 des Transferwagens 2 aufgelegt werden.

Nachdem die Palette 1 vollständig beladen bzw. palettiert wurde, fährt der Transferwagen 2 gemäß Fig. 9 in seine zweite Stellung, wobei der Anschlag 23 von der leeren Palette 1' überfahren und die volle Palette 1 zu dem Abholplatz C transportiert wird. In erfindungsgemäß vorteilhafter Weise wird gleichzeitig die volle Palette 1 von dem Beladeplatz B entfernt und die leere Palette 1' an dem Beladeplatz B positioniert. In Fig. 9 ist gut zu erkennen, dass die rechte Hälfte des Transferwagens 2 in der Art eines freitragenden Auslegerarms aus dem Gestellrahmen 15 herausragt. Dies ist insbesondere unter dem Aspekt der Arbeitssicherheit vorteilhaft, da ein Fuß einer Bedienperson, die sich in unmittelbarer Nähe des Abholplatzes C befindet, nicht überfahren werden kann. Darüber hinaus ist vorteilhaft, dass unterhalb des Transferwagens 2 ein optimal freier Bewegungsraum für ein Flurförderzeug geschaffen wird. Alternativ ist jedoch denkbar, die in Fig. 9 nach rechts herausragende Hälfte des Transferwagens 2 mit einem oder mehreren Stützrädern abzustützen. Sobald sich die leere Palette 1' an dem Beladeplatz B befindet, kann sofort wieder mit dem Palettierprozess begonnen werden, d.h. die Palette 1' kann von dem Palettierroboter mit Verpackungsschachteln 27 beladen werden, wie Fig. 10 zeigt.

Entsprechend Fig. 11 kann nun die volle Palette 1 von dem Abholplatz C abgeholt und eine leere Palette 1" mit Hilfe des Anschlags 21 und der Auflage 22 an dem Zuführplatz A positioniert werden. Dabei ist gleichgültig, ob zuerst das Abholen der vollen Palette 1 oder das Nachlegen der leeren Palette1" erfolgt. Da beim Nachlegen der leeren Palette 1" ein Eingriff in den von dem Gestellrahmen 15 abgegrenzten Raum erfolgt, in dem sich der Palettierroboter bewegt, ist zum Nachlegen eine kurze Unterbrechung des Palettierprozesses erforderlich. Nach dem Entfernen der vollen Palette 1 von dem zweiten Palettenbereich 4, der sich an dem Abholplatz C befindet, und bei Bedarf noch vor dem Nachlegen der leeren Palette 1" wird der Transferwagen 2 gemäß Fig. 12 wieder in seine erste Stellung gefahren, wobei der Anschlag 23 die Palette 1' ortsfest an dem Beladeplatz B hält und der Anschlag 24 von der leeren Palette 1" überfahren wird. Das Zurückfahren des Transferwagens 2 in die in Fig. 12 gezeigte, erste Stellung kann dabei ohne Unterbrechung des Palettierprozesses der Palette 1' erfolgen.

Nach Beendigung des Palettierens der Palette 1' wird der Transferwagen 2 gemäß Fig. 13 wieder in seine zweite Stellung gefahren, wobei der Anschlag 23 von der Palette 1" überfahren wird. Die jetzt volle Palette 1' wird von dem Beladeplatz B zu dem Abholplatz C befördert, während gleichzeitig die leere Palette 1" auf dem Beladeplatz B positioniert wird. Die volle Palette 1' kann von dem vorübergehend durch den zweiten Palettenbereich 4 des Transferwagens 2 in Anspruch genommenen Abholplatz C abgeholt werden. Anschließend wird das Palettenwechselverfahren beginnend mit dem in Fig. 10 dargestellten Stadium erneut und immer wieder durchgeführt.

Die Fig. 14 bis 23 illustrieren die Ablaufreihenfolge beim Palettenwechsel mit einer erfindungsgemäßen Vorrichtung, die ein Palettenmagazin zur Bevorratung leerer Paletten aufweist.

Gemäß Fig. 14 wird zunächst ein Stapel leerer Paletten auf dem Zuführplatz A abgelegt und mit Hilfe des Palettenmagazins 14 angehoben. Bei der gezeigten Ausführungsform befinden sich sieben leere Paletten in dem Palettenmagazin 14. Anschließend wird der Transferwagen 2 entsprechend Fig. 15 in seine erste Stellung gefahren, in der sein erster Palettenbereich 3 mit einer leeren Palette 1 beladbar ist, die zuvor innerhalb des Palettenmagazins 14 vereinzelt wurde.

Anschließend wird der Transferwagen 2 entsprechend Fig. 16 in seine zweite Stellung gefahren, wobei die Palette 1 mit Hilfe des Anschlages 24 an den Beladeplatz B mitgenommen und der Anschlag 23 von ihr überfahren wird. Daraufhin wird der Transferwagen 2 in die in Fig. 17 gezeigte dritte Stellung gefahren, wobei der Anschlag 23 die Palette 1 ortsfest an dem Beladeplatz B hält und der Anschlag 25 überfahren wird. In dieser dritten Stellung kann der in Fig. 17 in der linken Hälfte des Transferwagens 2 liegende erste Palettenbereich 3 nicht von dem Palettenmagazin 14 mit einer leeren Palette beladen werden. Dies liegt daran, dass das Palettenmagazin 14 ausreichend weit von dem Beladeplatz B beabstandet sein muss, damit der Palettierroboter die Palette 1 auch von der in Fig. 17 linken Seite des Beladeplatzes B aus anfahren kann.

Wie in Fig. 18 dargestellt, wird nun mit dem Beladen der Palette 1 mit Verpackungskartons 27 begonnen, wobei währenddessen eine weitere leere Palette 1' in dem Palettenmagazin 14 vereinzelt werden kann. Der Transferwagen 2 bewegt sich nicht. Er wird nach Beendigung des Palettierens der Palette 1 gemäß Fig. 19 in seine erste Stellung gefahren, wozu der Anschlag 23 fremdbetätigt umgelegt und wobei der Anschlag 24 von der Palette 1' überfahren wird. Sobald sich der Transferwagen 2 in seiner ersten Stellung befindet, kann die zuvor in dem Palettenmagazin 14 vereinzelte Palette 1' auf den ersten Palettenbereich 3 aufgelegt werden. Die volle Palette 1 steht unmittelbar rechts neben dem Palettenmagazin 14.

Anschließend wird der Transferwagen 2 gemäß Fig. 20 von seiner in Fig. 19 gezeigten, ersten Stellung in seine zweite Stellung gefahren, wobei der Anschlag 23 sowohl von der Palette 1 als auch von der Palette 1' überfahren wird. Dabei wird einerseits die volle Palette1 zu dem Abholplatz C befördert und andererseits die leere Palette 1' auf dem Beladeplatz B platziert. Nun wird entsprechend Fig. 21 mit dem Beladen der Palette 1' mit Verpackungskartons 27 begonnen, wobei eine weitere, leere Palette in dem Palettenmagazin 14 vereinzelt werden kann.

Wie in Fig. 22 dargestellt, wird anschließend die volle Palette 1 von dem Abholplatz C abgeholt, während der Palettierprozess der an dem Beladeplatz B befindlichen Palette 1' weiterläuft. Schließlich wird der Transferwagen 2 ebenso während des Palettierprozesses der Palette 1' von seiner in Fig. 22 gezeigten zweiten Stellung in die in Fig. 23 dargestellte, dritte Stellung gefahren, wobei der Anschlag 23 die Palette 1' ortsfest an dem Beladeplatz B hält und der Anschlag 24 überfahren wird. Anschließend wird das Palettenwechselverfahren beginnend mit dem in Fig. 19 gezeigten Stadium erneut und immer wieder durchgeführt.

Wie aus der vorangehenden Beschreibung ersichtlich, kann das erfindungsgemäße Verfahren in Zusammenhang mit der erfindungsgemäßen Vorrichtung ohne Palettenmagazin derart durchgeführt werden, dass das Anordnen der leeren Palette in dem ersten Palettenbereich des Transferwagens während des Palettierens der in dem zweiten Palettenbereich befindlichen Palette erfolgt, wobei der Palettierprozess lediglich kurz unterbrochen werden muss. Im Gegensatz dazu kann das Anordnen der leeren Palette in dem ersten Palettenbereich bei Verwendung der erfindungsgemäßen Vorrichtung mit Palettenmagazin erst nach dem Palettieren der in dem zweiten Palettenbereich befindlichen Palette erfolgen, da die leere Palette nach Beendigung des Palettierens erst gemäß der Darstellung in Fig. 19 von dem Palettenmagazin abgeholt werden muss.

Soll auch bei der Ausführungsform mit Palettenmagazin 14 das Anordnen der leeren Palette in dem ersten Palettenbereich 3 des Transferwagens 2 während des Palettierens der in dem zweiten Palettenbereich 4 befindlichen Palette erfolgen können, so ist alternativ denkbar, den Transferwagen 2 derart länger auszubilden, dass er in seiner in Fig. 18 gezeigten Stellung vollständig unter das Palettenmagazin 14 ragt. Eine leere Palette 1' kann dann in dem ersten Palettenbereich 3 positioniert werden während die in dem zweiten Palettenbereich 4 am Beladeplatz B befindliche Palette 1 palettiert wird. In diesem Fall entfällt die bei der Ausführungsform mit Palettenmagazin 14 vorgesehene dritte Stellung und der Transferwagen 2 ragt in seiner ausgefahrenen, zweiten Stellung weiter aus dem Gestellrahmen 15 heraus als in dem Fall, in welchem bei kürzerem Transferwagen 2 eine dritte Stellung angefahren werden kann.

Fig. 24 zeigt eine Aufsicht auf eine weitere Ausführungsform der erfindungsgemäßen Vorrichtung ähnlich zu der Aufsicht gemäß Fig. 3. Im Gegensatz zu der in Fig. 3 gezeigten Ausführungsform handelt es sich hier bei dem Anschlag 24 um einen nicht überfahrbaren, fest am Transferwagen 2 angebrachten Anschlag. Beim Zurückfahren des Transferwagens 2 von der in Fig. 11 gezeigten zweiten Stellung in die in Fig. 12 gezeigte, erste Stellung hebt dieser feste Anschlag 24 die leere Palette 1" ein wenig an. Anstatt des Anschlags 21 und der Auflage 22 können wenigstens zwei in Fig. 24 erkennbare, längliche Träger, insbesondere Rohre 28, vorgesehen werden, die an dem Rahmengestell 12 befestigt sind und zumindest mit ihren Oberseiten über die von den Mehrfachrollenketten 6 aufgespannte Ebene nach oben hinausragen. Eine leere Palette kann somit an dem Zuführplatz A in dem ersten Palettenbereich 3 des Transferwagens 2 auf die Rohre 28 aufgelegt werden. Des Weiteren kann der Anschlag 23 entfallen, da die Stirnseiten 29 an den in Fig. 24 unteren Enden der Träger, insbesondere Rohre 28, als Festanschläge zur Positionierung einer Palette an dem Beladeplatz B fungieren können.

Hierzu können die Rohre 28 an ihren in Fig. 24 unteren Enden verlängert oder verkürzt werden, indem je nach Bedarf verhältnismäßig kurze Rohrstücke in diese Enden eingesteckt oder eingeschraubt bzw. von diesen Enden entfernt werden.

Die an dem Transferwagen 2 vorgesehenen Anschläge 25 wurden bei der in Fig. 24 gezeigten Ausführungsform ersatzlos weggelassen. Bei Bedarf können die Anschläge 25 jedoch durch eine Begrenzung der Bewegungsmöglichkeiten der Mehrfachrollenketten 6 ersetzt werden. Dabei kann die Bewegungsmöglichkeit der an sich frei beweglichen Mehrfachrollenketten 6 derart beschränkt bzw. blockiert werden, dass eine in dem zweiten Palettenbereich 4 auf dem Transferwagen 2 befindliche Palette den Transferwagen 2 in Fig. 24 nicht nach unten verlassen kann. Eine entsprechende Begrenzung der Bewegungsmöglichkeit der Mehrfachrollenketten 6 kann beispielsweise mittels Freiläufen bewirkt werden, die mit den Umlenkrollen 7 und 8 zusammenwirken.

Fig. 25 zeigt eine Aufsicht auf eine noch weitere Ausführungsform der erfindungsgemäßen Vorrichtung ähnlich zu den Aufsichten gemäß der Fig. 3 bzw. 24. Gleiche Bezugszeichen in der Fig. 25 kennzeichnen gleiche Teile wie bei den Ausführungsformen gemäß der Fig. 3 bzw. 24.

Der in Fig. 25 gezeigte Transferwagen 2 ist für den Betrieb mit einem Palettenmagazin vorgesehen, wie er anhand der Fig. 14 bis 23 beschrieben wurde. Abweichend von den vorangehend beschriebenen Ausführungsformen erstreckt sich das Rahmengestell 12 im Wesentlichen über die gesamte Länge des Transferwagens 2. Das Rahmengestell 12 ist mittels insgesamt sechs Füßen 30 am Boden des Aufstellortes befestigt bzw. abgestützt. Das gesamte Rahmengestell 12 befindet sich innerhalb des in Fig. 25 nicht dargestellten Gestellrahmens 15 (vgl. Fig. 2 sowie 14 bis 23). Der Zuführplatz A bzw. der Beladeplatz B ist am linken Rand der Fig. 25 gekennzeichnet.

Im Gegensatz zu den vorangehend beschriebenen Ausführungsformen ist der zum Antreiben des Transferwagens 2 vorgesehene Elektromotor 5 nicht an dem Transferwagen 2 selbst angebracht, sondern ist stationär unterhalb der Ebene, in der die Paletten am Beladeplatz B zu liegen kommen, angeordnet. Die Übertragung der Antriebsbewegung von dem Elektromotor 5 auf den Transferwagen 2 erfolgt mit Hilfe eines in Fig. 25 nicht dargestellten Antriebsriemens, der an dem Transferwagen 2 festgeklemmt ist. Dadurch wird in vorteilhafter Weise eine Reduzierung der zu bewegenden Masse des Transferwagens 2 erreicht. In weiterer Abweichung von den vorangehend beschriebenen Ausführungsformen sind bei der Ausführungsform gemäß Fig. 25 die drehbar gelagerten Führungsrollen 13 nicht an dem Transferwagen 2, sondern an dem stationären Rahmengestell 12 befestigt. Dementsprechend sind die vorzugsweise einen U-Querschnitt aufweisenden Führungsschienen 11 nicht an dem Rahmengestell 12, sondern an dem Transferwagen 2 angeordnet, so dass sie sich mit letzterem mitbewegen.

Als antriebsloses Palettenrelativbewegungsmittel im Sinne der vorliegenden Erfindung sind bei der Ausführungsform gemäß Fig. 25 insgesamt sechs Gleitleisten 31 vorgesehen, die an dem Transferwagen 2 befestigt sind und sich folglich mit diesem mitbewegen. Mehrfachrollenketten wie bei den vorangehenden Ausführungsformen sind somit nicht vorhanden. In Fig. 25 sind des weiteren insgesamt drei Anschlaggleitleisten 32 zu erkennen, die jeweils zwischen zwei Gleitleisten 31 angeordnet und an dem Rahmengestell 12 befestigt sind, so dass sie sich nicht mit dem Transferwagen 2 mitbewegen. Die stationären Anschlaggleitleisten 32 erstrecken sich nicht über die gesamte Länge des Rahmengestells 12 bzw. Transferwagens 2, sondern enden mit ihren Stirnflächen 33 dort, wo der Beladeplatz B beginnt, wie in Fig. 25 zu erkennen ist. Die Anschlaggleitleisten 32 ragen entgegen der Blickrichtung der Fig. 25 ein wenig über diejenige Ebene hinaus, die von den Oberflächen der Gleitleisten 31 gebildet wird. Dadurch wirken die Stirnflächen 33 der Anschlaggleitleisten 32 während des Zurückfahrens des Transferwagens 2 von der zweiten Stellung in die erste oder die dritte Stellung als Anschläge, die die am Beladeplatz B befindliche Palette ortsfest am Beladeplatz B festhalten. Die sich mit dem Transferwagen 2 mitbewegenden Gleitleisten 31 befinden sich dabei in Kontakt mit der Unterseite der Palette und gleiten entlang dieser ab. Die Anschlaggleitleisten 32 haben in diesem Zusammenhang dieselbe Funktion wie die Rohre 28 bei der in Fig. 24 gezeigten Ausführungsform.

Abweichend von den vorangehenden Ausführungsformen weist die Ausführungsform gemäß Fig. 25 keine festen Anschläge zur Mitnahme einer leeren Palette von dem Zuführplatz A zu dem Beladeplatz B auf, sondern schwenkbar gelagerte Anschläge 24. Diese Anschläge 24 werden beim Anfahren des Zuführplatzes A mittels mechanischer Zwangsführung mechanisch angehoben und klappen beim Zurückfahren von dem Beladeplatz B in Richtung Zuführplatz A aufgrund Schwerkraftwirkung nach unten weg. Dadurch kann eine am Zuführplatz A befindliche, leere Palette problemlos unterfahren werden. Die Zentrierung bzw. Positionierung einer zu beladenen Palette an dem Beladeplatz B erfolgt durch das Zurückfahren des Transferwagens 2 in Richtung des Zuführplatzes A und das dadurch bewirkte Anschlagen der zu beladenen Palette an den Stirnseiten 33 der Anschlaggleitleisten 32.

Erfolgt die Beladung des Zuführplatzes A nicht mittels eines Palettenmagazins, so kann die zugeführte Palette am Zuführplatz A in der Richtung quer zur Längsrichtung des Transferwagens 2 mittels eines geeigneten Anschlages am Zuführplatz A zentriert bzw. positioniert werden. Bei Beladung des Zuführplatzes A mit Hilfe eines Palettenmagazins können die Anschlaggleitleisten 32 zumindest im Bereich des Zuführplatzes A durch Schienen mit schräg zur Längsrichtung des Transferwagens 2 stehenden Rollen ersetzt werden, so dass die Palette während der Bewegung in Richtung Beladeplatz B quer zur Längsrichtung des Transferwagens 2 zentriert bzw. positioniert wird.

### BEZUGSZEICHENLISTE

- 1: Palette
- 2: Transferwagen
- 3: erster Palettenbereich
- 4: zweiter Palettenbereich
- 5: Antriebseinrichtung
- 6: Palettenrelativbewegungsmittel
- 7: Umlenkrolle
- 8: Umlenkrolle
- 9: Rad
- 10: Schienen
- 11: Führungsschiene
- 12: Rahmengestell
- 13: Führungsrolle
- 14: Palettenmagazin
- 15: Gestellrahmen
- 16: Verpackungsautomat
- 17: Palettierautomat
- 18: hinteres Ende der Briefhüllenherstellungsmaschine
- 19: Förderband
- 20: Deichselstapler
- 21: Anschlag
- 22: Auflage
- 23: Anschlag
- 24: Anschlag
- 25: Anschlag
- 26: Anschlag
- 27: Verpackungsschachtel
- 28: Rohre
- 29: Stirnseiten der Rohre
- 30: Füße
- 31: Gleitleisten
- 32: Anschlaggleitleisten
- 33: Stirnseiten der Anschlaggleitleisten

## Patentansprüche

1. Vorrichtung zum Wechseln von Paletten (1,1') in einem Palettierautomaten (17) zum Anordnen von Gegenständen (27) auf den Paletten (1,1'), mit
- einem Transferwagen (2) mit einem ersten Palettenbereich (3) zur Aufnahme einer ersten Palette (1') und einem zweiten Palettenbereich (4) zur Aufnahme einer zweiten Palette (1), und
- einer Antriebseinrichtung (5) zum Verfahren des Transferwagens (2) zwischen wenigstens einer ersten Stellung und einer zweiten Stellung, **dadurch gekennzeichnet, daß**
- in der ersten Stellung des Transferwagens (2) der erste Palettenbereich (3) mit einer leeren Palette (1') beladbar ist während auf einer in dem zweiten Palettenbereich (4) befindlichen Palette (1) die Gegenstände (27) anordenbar sind oder in der ersten Stellung des Transferwagens (2) der erste Palettenbereich (3) mit einer leeren Palette (1') beladbar ist und eine dritte Stellung des Transferwagens (2) anfahrbar ist, in der die Gegenstände auf einer in dem zweiten Palettenbereich (4) befindlichen Palette (1) anordenbar sind, und in der zweiten Stellung des Transferwagens (2) die Gegenstände (27) auf der leeren Palette (1') anordenbar sind während die in dem zweiten Palettenbereich (4) befindliche, mit den Gegenständen (27) beladene Palette (1) von dem Transferwagen (2) abnehmbar ist.

2. Vorrichtung nach Anspruch 1,
**dadurch gekennzeichnet, dass**
der Transferwagen (2) ein antriebsloses Palettenrelativbewegungsmittel (6, 31) aufweist, das sowohl in dem ersten Palettenbereich (3) als auch in dem zweiten Palettenbereich (4) derart angeordnet ist, dass sich der Transferwagen (2) beim Verfahren von der zweiten Stellung in die erste Stellung oder in die dritte Stellung unter der in dem ersten Palettenbereich (3) befindlichen, zur Umgebung ortsfest bleibenden Palette (1') hindurchbewegt, die **dadurch** relativ zu dem Transferwagen (2) von seinem ersten Palettenbereich (3) in seinen zweiten Palettenbereich (4) wandert.

3. Vorrichtung nach Anspruch 2,
**dadurch gekennzeichnet, dass**
das Palettenrelativbewegungsmittel von einer oder mehreren Gleitleisten (31) gebildet wird, die an dem Transferwagen (2) befestigt ist bzw. sind und in Kontakt mit der Unterseite einer Palette entlang dieser gleiten können.

4. Vorrichtung nach Anspruch 2 oder 3,
**dadurch gekennzeichnet, dass**
ortsfeste Anschlaggleiteinrichtungen (28, 32) vorgesehen sind, die über die Ebene der Palettenbereiche (3, 4) des Transferwagens (2) hinausragen, wobei die leere Palette (1') beim Verfahren des Transferwagens (2) von der ersten Stellung in die zweite oder die dritte Stellung auf den Anschlaggleiteinrichtungen (28, 32) gleiten kann und die Anschlaggleiteinrichtungen (28, 32) beim Verfahren des Transferwagens (2) von der zweiten Stellung in die erste oder dritte Stellung einen oder mehrere Anschläge (29, 33) bilden, die die zunächst in dem ersten Palettenbereich (3) befindliche Palette (1') relativ zur Umgebung ortsfest halten.

5. Vorrichtung nach einem der vorangehenden Ansprüche,
**dadurch gekennzeichnet, dass**
eine Führungseinrichtung (11, 12, 13) zum Führen des Transferwagens (2) während seiner Verfahrbewegung vorgesehen ist.

6. Vorrichtung nach Anspruch 5,
**dadurch gekennzeichnet, dass**
die Führungseinrichtung ein Rahmengestell (12), wenigstens zwei Führungsschienen (11) und drehbar gelagerte Führungsrollen (13) umfasst, wobei die Führungsschienen (11) an dem Rahmengestell (12) und die Führungsrollen (13) an dem Transferwagen (2) oder umgekehrt die Führungsschienen (11) an dem Transferwagen (2) und die Führungsrollen (13) an dem Rahmengestell (12) angebracht sind.

7. Vorrichtung nach Anspruch 6,
**dadurch gekennzeichnet, dass**
jeweils eine der Führungsschienen (11) an einer Seite des Transferwagens (2) längs dessen Verfahrrichtung angeordnet ist.

8. Vorrichtung nach Anspruch 6 oder 7,
**dadurch gekennzeichnet, dass**
die Führungsschienen (11) wenigstens halb so lang sind wie der Transferwagen (2) und wenigstens die Hälfte des Transferwagens (2) in der ersten Stellung in die Führungsschienen (11) eingefahren ist, so dass er in der Art eines Auslegers abgestützt wird.

9. Vorrichtung nach Anspruch 8,
**dadurch gekennzeichnet, dass**
der Verfahrweg des Transferwagens (2) zwischen der ersten Stellung und der zweiten Stellung wenigstens seiner halben Länge entspricht und der Transferwagen (2) in der zweiten Stellung noch von den Führungsschienen (11) abgestützt wird.

10. Vorrichtung nach Anspruch 8 oder 9,
**dadurch gekennzeichnet, dass**
an dem den Führungsschienen (11) abgewandten Ende des Transferwagens (2) wenigstens ein Stützrad zum Abstützen des Transferwagens (2) angeordnet ist.

11. Vorrichtung nach einem der vorangehenden Ansprüche,
**dadurch gekennzeichnet, dass**
ein Palettenmagazin (14) zur Bevorratung leerer Paletten vorgesehen ist, mittels welchem der erste Palettenbereich (3) in der ersten Stellung des Transferwagens (2) mit einer leeren Palette beladbar ist.

12. Palettierautomat zum Anordnen von Gegenständen (27) auf Paletten (1,1'),
**dadurch gekennzeichnet, dass**
eine Vorrichtung zum Wechseln der Paletten (1,1') nach einem der vorangehenden Ansprüche vorgesehen ist, wobei ein Gestellrahmen (15) den Palettierautomaten (17) gegenüber seiner Umgebung abgrenzt und sich der Transferwagen (2) in der ersten Stellung oder in der ersten und der dritten Stellung vollständig innerhalb des Gestellrahmens (15) befindet während er in der zweiten Stellung wenigstens mit seinem zweiten Palettenbereich (4) aus dem Gestellrahmen (15) herausragt, so dass die mit den Gegenständen (27) beladene Palette außerhalb des Gestellrahmens (15) von dem Transferwagen (2) abgenommen werden kann.

13. Verfahren zum Wechseln von Paletten (1,1') in einem Palettierautomaten (17) zum Anordnen von Gegenständen (27) auf den Paletten (1,1'), wobei das
- Anordnen einer leeren Palette (1') in einem ersten Palettenbereich (3) eines Transferwagens (2), und das
- Beladen einer in einem zweiten Palettenbereich (4) des Transferwagens (2) befindlichen Palette (1) mit den Gegenständen (27) an einem Beladeplatz (B) des Palettierautomaten (17) erfolgen,
- **gekennzeichnet durch** Verfahren des Transferwagens (2) von einer ersten Stellung in eine zweite Stellung, wodurch gleichzeitig die in dem ersten Palettenbereich (3) befindliche, leere Palette (1') zu dem Beladeplatz (B) und die in dem zweiten Palettenbereich (4) befindliche, beladene Palette (1) zu einem Abholplatz (C) transportiert wird.

14. Verfahren nach Anspruch 13,
**dadurch gekennzeichnet, dass**
das Beladen der in dem zweiten Palettenbereich (4) befindlichen Palette (1) vor dem Anordnen der leeren Palette (1') in dem ersten Palettenbereich (3) erfolgt.

15. Verfahren nach Anspruch 13 oder 14,
**dadurch gekennzeichnet, dass**
die beladene Palette (1) von dem Abholplatz (C) abgeholt und der Transferwagen (2) von der zweiten Stellung in die erste Stellung oder in eine dritte Stellung verfahren wird, indem er unter der in dem ersten Palettenbereich (3) befindlichen, ortsfest an dem Beladeplatz (B) bleibenden Palette (1') hindurchbewegt wird, die **dadurch** relativ zu dem Transferwagen (2) von seinem ersten Palettenbereich (3) in seinen zweiten Palettenbereich (4) wandert.

16. Verfahren nach Anspruch 15,
**dadurch gekennzeichnet, dass**
das Verfahren des Transferwagens (2) von der zweiten Stellung in die erste Stellung oder in die dritte Stellung während des Beladens der ortsfest an dem Beladeplatz (B) bleibenden Palette (1') erfolgt.

## Claims

1. Device for changing pallets (1, 1') in an automatic palletizing machine (17) [and] for arranging objects (27) on the pallets (1, 1'), with
- a transfer carriage (2) with a first pallet area (3) to accept a first pallet (1') and a second pallet area (4) to accept a second pallet (1), and
- a drive unit (5) to move the transfer carriage (2) between at least one first position and one second position,
**characterized by**
- the first pallet area (3) being capable of being loaded with an empty pallet (1') while the transfer carriage (2) is in its first position while the objects (27) on a pallet (1) located in the second pallet area (4) can be arranged or in the first position for the transfer carriage (2) the first pallet area (3) can be loaded with an empty pallet (1') and a third position of the transfer carriage (2) can be approached, in which the objects on a pallet (1) in the second pallet area (4) can be arranged and in the second position of the transfer carriage (2) the objects (27) on the empty pallet (1') can be arranged while the pallet (1) loaded with the objects (27) and located in the second pallet area (4) can be picked up by the transfer carriage (2)

2. Device in accordance with Claim 1,
**characterized by**
the transfer carriage (2) exhibiting a non-driven means for relative movement of pallets (6, 31) which is arranged in both the first pallet area (3) and in the second pallet area (4) in such a way that the transfer carriage (2) in moving from the second position into the first position or into the third position travels beneath the pallet (1') located in the first pallet area (3) and remaining stationary in regard to its surroundings, which thus moves, relative to the transfer carriage (2) from its first pallet area (3) into its second pallet area (4).

3. Device in accordance with Claim 2,
**characterized by**
the means for relative pallet movement being formed by one or more slide strips (31) which is/are attached to the transfer carriage (2) and which, in contact with the lower surface of a pallet, can slide along the pallet.

4. Device in accordance with Claim 2 or 3,
**characterized by**
stationary sliding stops (28, 32) being provided which protrude beyond the plane of the pallet areas (3, 4) on the transfer carriage (2), wherein the empty pallet (1') during the movement of the transfer carriage (2) from its first position into its second or third position can slide on the sliding stops (28, 32) and the sliding stops (28, 32) form one or more stops (29, 33) when the transfer carriage (2) is moving from its second position into its first or third position which initially keep the pallet (1') located in the first pallet area (3) stationary in relation to its surroundings.

5. Device in accordance with one of the foregoing claims,
**characterized by**
a guide device (11, 12, 13) being provided to guide the transfer carriage (2) during its motion.

6. Device in accordance with Claim 5,
**characterized by**
the guide device comprising a guide frame (12), at least two guide rails (11) and swivel-mounted guide rollers (13) wherein the guide rails (11) are attached to the guide frame (12) and the guide rollers (13) are attached to the transfer carriage (2) or, conversely, the guide rails (11) are attached to the transfer carriage (2) and the guide rollers (13) are attached to the guide frame (12).

7. Device in accordance with Claim 6,
**characterized by** the guide rails (11) being located either side of the transfer carriage (2), longitudinal to its transfer direction.

8. Device in accordance with Claim 6 or 7,
**characterized by** the guide rails (11) being at least half as long as the transfer carriage (2) and by at least the half of the transfer carriage (2) being retracted into the guide rails (11) in the first position so that it is supported in the fashion of an outrigger.

9. Device in accordance with Claim 8,
**characterized by**
the travel path of the transfer carriage (2) between the first position and the second position corresponding to at least the half of its length and the transfer carriage (2) still being supported by the guide rails (11) when it is in its second position.

10. Device in accordance with Claim 8 or 9,
**characterized by**
at least one support wheel to support the transfer carriage (2) being located at the end of the transfer carriage (2) which faces away from the guide rails (11).

11. Device in accordance with one of the foregoing claims,
**characterized by**
a pallet magazine (14) being provided for storage of empty pallets, by means of which the first pallet area (3) in the first position of the transfer carriage (2) can be loaded with an empty pallet.

12. Automatic palletizing machine to arrange objects (27) on pallets (1, 1'),
**characterized by**
a device for changing the pallets (1, 1') being provided as per one of the foregoing claims, wherein a safety frame (15) delineates the automatic palletizing machine (17) from its surroundings and the transfer carriage (2) in its first position or in its first and third position being situated completely within the safety frame (15) while when in its second position it protrudes at least with its second pallet area (4) out of the safety frame (15) so that the pallet loaded with the objects (27) outside the safety frame (15) can be picked up by the transfer carriage.

13. Procedure for changing pallets (1, 1') in an automatic palletizing machine (17) to arrange objects (27) on the pallets (1, 1') wherein the
- arrangement of an empty pallet (1') takes place in the first pallet area (3) of a transfer carriage (2) and
- the loading of a pallet (1) in the second pallet area (4) of the transfer carriage (2) with the objects (27) takes place at a loading station (B) within the automatic palletizing machine (17),
**characterized by**
- the movement of the transfer carriage (2) from a first position into a second position, wherein at the same time the empty pallet (1') in the first pallet area (3) is moved to the charging station (B) and the loaded pallet (1) found in the second pallet area (4) is moved to a pick-up station (C).

14. Procedure in accordance with Claim 13,
**characterized by** the loading of the pallet (1) in the second pallet area (4) taking place before the empty pallet (1') is located in the first pallet area (3).

15. Procedure in accordance with Claim 13 or 14,
**characterized by**
the loaded pallet (1) being picked up from the pick-up station (C) and the transfer carriage (2) being moved from the second position into the first position or into a third position, in which it is moved beneath the pallet (1') located in the first pallet area (3) and remaining stationary at the loading station (B), which thus travels relative to the transfer station (2) from its first pallet area (3) into its second pallet area (4).

16. Procedure in accordance with Claim 15,
**characterized by**
the movement of the transfer carriage (2) from its he second position into its first position or into its third position taking place while the pallet (1') remains stationary at the loading station (B).

## Revendications

1. Dispositif destiné au changement de palettes (1,1') dans un palettiseur automatique (17) pour l'agencement d'objets (27) sur les palettes (1,1'), avec
- un chariot de transfert (2) avec une première zone de palettes (3) destinée à la réception d'une première palette (1') et une seconde zone de palettes (4) destinée à la réception d'une seconde palette (1), et
- un dispositif d'entraînement (5) servant au déplacement du chariot de transfert (2) entre au moins une première position et une deuxième position,
**caractérisé par le fait**
**que** dans la première position du chariot de transfert (2), une palette vide (1') peut être chargée dans la première zone de palettes (3), tandis que les objets (27) peuvent être agencés sur la palette (1) se trouvant dans la seconde zone de palettes (4) ou qu'une palette vide (1') peut être chargée dans la première zone de palettes (3) dans la première position du chariot de transfert (2) et que le chariot de transfert (2) peut atteindre une troisième position dans laquelle les objets peuvent être agencés sur une palette (1) se trouvant dans la seconde zone de palettes (4), et que les objets (27) peuvent être agencés sur la palette vide (1') dans la deuxième position du chariot de transfert (2), tandis que la palette (1) se trouvant dans la deuxième zone de palettes (4) et chargée d'objets (27) peut être retirée du chariot de transfert (2).

2. Dispositif d'après la revendication 1,
**caractérisé par le fait**
**que** le chariot de transfert (2) présente un mécanisme de mouvement relatif des palettes sans entraînement (6, 31) qui est disposé tant dans la première zone de palettes (3) que dans la seconde (4), de manière à ce que le chariot de transfert (2), lorsqu'il est déplacé de la deuxième à la première ou à la troisième position, passe sous la palette (1') qui, stationnaire par rapport à son environnement dans la première zone de palettes (3), se déplace ainsi de la première zone de palettes (3) vers la deuxième zone de palettes (4) par rapport au chariot de transfert (2).

3. Dispositif d'après la revendication 2,
**caractérisé par le fait**
**que** le mécanisme de mouvement relatif des palettes est constitué par une ou plusieurs barres de glissement (31) fixées au chariot de transfert (2) et, en contact avec la partie inférieure d'une palette, peuvent glisser le long de celle-ci.

4. Dispositif d'après la revendication 2 ou 3,
**caractérisé par le fait**
**qu'**il est prévu des dispositifs de glissement à butée stationnaires (28, 32) qui dépassent du plan des zones de palettes (3, 4) du chariot de transfert (2), la palette vide (1') pouvant glisser sur les dispositifs de glissement à butée (28, 32) lorsque le chariot de transfert (2) passe de la première à la deuxième ou troisième position et les dispositifs de glissement à butée (28, 32), lorsque le chariot de transfert (2) passe de la deuxième à la première ou troisième position, constituant une ou plusieurs butées (29, 33) qui maintiennent pour l'instant dans une position stationnaire par rapport à son environnement la palette (1') se trouvant dans la première zone de palettes (3).

5. Dispositif d'après l'une des revendications précédentes,
**caractérisé par le fait**
**qu'**il est prévu un dispositif de guidage (11, 12, 13) destiné à guider le chariot de transfert (2) pendant le mouvement de déplacement de ce dernier.

6. Dispositif d'après la revendication 5,
**caractérisé par le fait**
**que** le dispositif de guidage comprend un bâti (12), au moins deux rails de guidage (11) et des galets de guidage pivotables (13), les rails de guidage (11) étant fixés au bâti (12) et les galets de guidage (13) au chariot de transfert (2) ou, inversement, les rails de guidage (11) au chariot de transfert (2) et les galets de guidage (13) au bâti (12).

7. Dispositif d'après la revendication 6,
**caractérisé par le fait**
**qu'**un rail de guidage (11) se trouve sur chaque côté du chariot de transfert (2), le long du sens de déplacement de ce dernier.

8. Dispositif d'après la revendication 6 ou 7,
**caractérisé par le fait**
**que** les rails de guidage (11) présentent au moins la demi-longueur du chariot de transfert (2) et qu'au moins la moitié du chariot de transfert (2) est introduite dans les rails de guidage (11) dans la première position, de manière à ce qu'il soit soutenu tel une flîche.

9. Dispositif d'après la revendication 8,
**caractérisé par le fait**
**que** le parcours de déplacement du chariot de transfert (2) entre les première et deuxième positions correspond au moins à sa demi-longueur et que le chariot de transfert (2) est soutenu encore dans la deuxième position par les rails de guidage (11).

10. Dispositif d'après la revendication 8 ou 9,
**caractérisé par le fait**
**qu'**au moins une roue d'appui destinée au support du chariot de transfert (2) est disposée à l'extrémité opposée aux rails de guidage (11) du chariot de transfert (2).

11. Dispositif d'après l'une des revendications précédentes,
**caractérisé par le fait**
**qu'**il est prévu un magasin de palettes (14) destiné à la réserve de palettes vides et permettant de charger la zone de palettes (3) avec une palette vide lorsque le chariot de transfert (2) se trouve en première position.

12. Palettiseur automatique destiné à l'agencement d'objets (27) sur des palettes (1,1'),
**caractérisé par le fait**
**qu'**il est prévu un dispositif de changement de palettes (1, 1') d'après l'une des revendications précédentes, un cadre (15) limitant le palettiseur automatique (17) par rapport à son environnement et le chariot de transfert (2) en première ou en première et troisième positions se trouvant entièrement à l'intérieur du cadre (15), tandis qu'en deuxième position, il dépasse au moins avec sa seconde zone de palettes (4) du cadre (15), de manière à ce que la palette chargée des objets (27) puisse être retirée par le chariot de transfert (2) hors du cadre (15).

13. Procédé destiné au changement de palettes (1, 1') dans un palettiseur automatique (17) pour l'agencement d'objets (27) sur les palettes (1, 1'),
- une palette vide (1') étant agencée dans une première zone de palettes (3) d'un chariot de transfert (2) et
- une palette (1) se trouvant dans la seconde zone de palettes (4) du chariot de transfert (2) étant chargée d'objets (27) à un point de chargement (B) du palettiseur automatique (17),
**caractérisé par le fait**
**que** le chariot de transfert (2) est déplacé d'une première vers une deuxième position, la palette vide (1') se trouvant dans la première zone de palettes (3) étant en même temps transportée vers le point de chargement (B) et la palette chargée (1) se trouvant sans la seconde zone de palettes (4) vers un point de retrait (C).

14. Procédé d'après la revendication 13,
**caractérisé par le fait**
**que** le chargement de la palette (1) se trouvant dans la seconde zone de palettes (4) est réalisé avant l'agencement de la palette vide (1') dans la première zone de palettes (3).

15. Procédé d'après la revendication 13 ou 14,
**caractérisé par le fait**
**que** la palette chargée (1) est saisie au point de retrait (C) et que le chariot de transfert (2), pour être déplacé de la deuxième vers la première position ou vers une troisième position, est déplacé sous la palette (1') qui, se trouvant dans la première zone de palettes (3) et demeurant stationnaire au point de chargement (B), se déplace, par rapport au chariot de transfert (2), de sa première position de palettisation (3) vers sa seconde zone de palettes (4).

16. Procédé d'après la revendication 15,
**caractérisé par le fait**
**que** le déplacement du chariot de transfert (2) de la deuxième position vers la première ou la troisième position est réalisé pendant le chargement de la palette (1') demeurant stationnaire au point de chargement (B).
